# EUROPÄISCHE PATENTANMELDUNG

(11) **EP 0 558 989 A1**
(43) Veröffentlichungstag der Anmeldung: **08.09.1993**
(21) Anmeldenummer: 93102386.5
(22) Anmeldetag: 16.02.1993
(51) Int. Cl.: B29C 67/22, B29C 59/00, B29C 59/02

(54) **Verfahren zum Herstellen einer strukturierten Oberfläche an einem aus expandierten Polypropylen-Partikeln gefertigten Schaumstoff-Formkörper**

(30) Priorität: 03.03.1992 DE 4206617
(71) Anmelder: Gebr. Happich GmbH, D-42097 Wuppertal (DE); FEBRA-KUNSTSTOFFE WALTER FEURER, D-74336 Brackenheim (DE); Bayerische Motoren Werke Aktiengesellschaft, 80788 München (DE)
(72) Erfinder: Heidecke, Wolfgang, W-6634 Sankt Barbara/Wallerfangen 8 (DE); Lecorvaisier, René, F-57470 Hombourg-Haut (FR); Mosser, Serge, F-57220 Bambiderstroff (DE); Viertel, Lothar, W-6636 Altforweiler (DE); Siegemund, Eckard, Dr., W-8000 München 21 (DE); Rückert, Rolf, W-7138 Schwaigern (DE)

(57) **Zusammenfassung**

Bei einem Verfahren zum Herstellen einer zumindest bereichsweise strukturierten Oberfläche an einem aus expandierten Polypropylen-Partikeln gefertigten Schaumstoff-Formkörper ist vorgesehen, daß die Oberflächenschicht im zu strukturierenden Bereich des Schaumstoff-Formkörpers plastifiziert und prägebeareitet wird.

## Beschreibung

Die Erfindung bezieht sich auf ein Verfahren zum Herstellen einer zumindest bereichsweise strukturierten Oberfläche an einem aus expandierten Polypropylen-Partikeln gefertigten Schaumstoff-Formkörper.

Es wird allgemein angestrebt, Kunststoffteile in ständig zunehmenden Maße recyclingsfähig zu gestalten. Dabei hat sich gezeigt, daß insbesondere Polypropylen eine ausgezeichnete Recyclingsfähigkeit besitzt. Polypropylen wird daher zunehmend eingesetzt, und zwar im Automobilbau, z.B. als Stoßfänger- u. dgl. Einlagen, als Verpackungsmaterial zum Schutz von hochempfindlichen Produkten, als Transport-Behältnisse und Paletten, wie auch für thermische Isolierungen usw.. Zwecks dekorativer Aufwertung werden aus expandierten Polypropylen-Partikeln gefertigte Schaumstoff-Formkörper oftmals mit einer Deckschicht versehen, wodurch aber nicht nur die Herstellung, wegen Schwierigkeiten hinsichtlich der Verbindungstechnik, sondern auch das Recycling erschwert wird, besonders dann, wenn die Einzelkomponenten aus unterschiedlichen Polymeren bestehen. Es ist schon versucht worden, an aus expandierten Polypropylen-Partikeln gefertigten Schaumstoff-Formkörpern strukturierte Oberflächen unmittelbar auszubilden. Das Aufbringen der Struktur auf die Formkörperoberfläche erfolgte bei der Herstellung des Schaumstoff-Formkörpers, indem ein Schaumwerkzeug verwendet wurde, das an den vorgegebenen Stellen eine negative Strukturierung aufwies. Dabei konnte ein zufriedenstellendes Ergebnis nicht erreicht werden, weil sich die Polypropylen-Partikel auch im strukturierten Oberflächenbereich des Schaumstoff-Formkörpers noch deutlich sichtbar abzeichneten.

Der vorliegenden Erfindung liegt nun die Aufgabe zugrunde ein Verfahren der eingangs näher erwähnten Art aufzuzeigen, das eine Oberflächenänderung und Ausbildung einer dekorativen Oberflächenstruktur an der Oberfläche eines aus expandierten Polypropylen-Partikeln gefertigten Schaumstoff-Formkörpers ermöglicht.

Zur Lösung dieser Aufgabe ist erfindungsgemäß vorgesehen, daß die Oberflächenschicht im zu strukturierenden Bereich des Schaumstoff-Formkörpers plastifiziert und prägebearbeitet wird. Dabei ist es möglich, daß die Oberflächenschicht des Schaumstoff-Formkörper zunächst plastifiziert und sodann prägebearbeitet wird. Bevorzugterweise ist vorgesehen, daß die Oberflächenschicht des Schaumstoff-Formkörpers zeitgleich plastifiziert und prägebearbeitet wird. Hierfür bietet sich in Ausgestaltung der Erfindung die Möglichkeit an, daß die Oberflächenschicht des Schaumstoff-Formkörpers mittels eines aufgeheizten Prägestempels plastifiziert und prägebearbeitet wird. Das erfindungsgemäße Verfahren kann noch dadurch optimiert werden, daß der Schaumstoff-Formkörper zunächst bis auf eine seine Eigenstabilität gerade noch erhaltene Temperatur erwärmt und hiernach an der Oberflächenschicht plastifiziert und prägebearbeitet wird.

Durch die Erfindung wird demnach ein partielles oder flächenförmiges Umwandeln des Partikelschaumgefüges im Oberflächenbereich des Schaumstoff-Formkörpers unter Wärme und Druck erzielt. Die Umwandlung des Partikelschaumgefüges erfolgt in eine kompakte geschlossene Oberfläche und stellt sicher, daß sich keine Polypropylen-Partikel mehr an der strukturierten Oberfläche abzeichnen können.

Bevorzugt wird man das erfindungsgemäße Verfahren durchführen, indem man einen Schaumstoff-Formkörper soweit erwärmt, daß er seine Formbeständigkeit noch soeben beibehält. Sodann wird gegen die zu strukturierende Oberfläche des Schaumstoff-Formkörpers ein über die Schmelztemperatur des thermoplastischen Formkörperwerkstoffes aufgeheizter Prägestempel verfahren. Durch die Berührung des Prägestempels mit der Oberfläche des Schaumstoff-Formkörpers entsteht eine Schmelze, in die der Prägestempel unter Bilden einer vorgegebenen Struktur (Narbung, Holz-, Waben-, Raster-Muster od. dgl.) gepreßt wird. Bei diesem Vorgang entsteht eine Oberfläche mit Foliencharakter mit der am Prägestempel vorgegebenen Struktur.

Die auf den Schaumstoff-Formkörper aufzubringende Prägekraft muß jeweils empirisch ermittelt werden, weil diese abhängig ist, von der jeweiligen Rauhtiefe der gewünschten Strukturierung und der jeweiligen, zwischen dem Schaumstoff-Formkörper und dem Prägestempel bestehenden Temperaturdifferenz.

Die Erfindung ist nicht nur anwendbar für die Erzielung dekorativer Oberflächenstrukturen an einem aus expandierten Polypropylen-Partikeln gefertigten Schaumstoff-Formkörper sondern mit Vorteil auch anwendbar, um einen solchen Formkörper mit partiellen oder flächenförmigen Verdichtungszonen auszubilden. Auch hier soll das Partikelschaumgefüge des Schaumstoff-Formkörpers, in beschriebener Weise unter Wärme und Druck, bis hin zur Folienstärke umgewandelt werden. Solche Verdichtungen können für Versteifungszwecke, Randeinschnürungen, Randverdünnungen od. dgl. am Formkörper erwünscht sein.

EPP ist ein Schaumstoff aus expandierten Polypropylen-Partikeln. Die Schaumstoff-Partikel die im Handel erhältlich sind, sind aufgrund der thermoplastischen Eigenschaften des Ausgangsmaterials verschweißbar und besitzen eine überwiegend geschlossene Zellstruktur. Die Partikel werden mittels z. B. Naßdampf (Temperatur je nach Dichte ca. 140 - 145 ^{o}C) auf Formteilautomaten zu Formkörpern vielfältiger Art verarbeitet. Die Partikelgröße kann zwischen 2 bis 6 mm liegen.

Bei erfolgreich durchgeführten Versuchen wurden getemperte Musterplatten mit den Maßen 200 x 300 x 25 mm und spezifischer Dichte von 30 g/l verwendet; Material der Firma ARCO Chemical - Handelsname "APRO" - Typ 5719.

Die vorgenannten Musterplatten wurden jeweils in eine nach oben offene Form eingelegt. Danach wurde auf die Musterplatten ein in einer handelsüblichen Presse eingespannter Prägestempel vertikal zubewegt. Der Prägestempel wurde auf eine der Schmelztemperatur des Polypropylen-materials entsprechende Temperatur (ca. 143 ^{o}C) mittels elektrischer Heizpatronen erwärmt und in die Musterplatte eingepreßt mit einer Verweilzeit von 20 - 40 Sekunden je nach gewünschter Strukturierungstiefe. Die Verweilzeit beinhaltet auch die erforderliche Abkühlung des Prägestempels. Der heiße Stempel schmilzt die Oberfläche des zu behandelnden Teils an und bildet einen Film, der mit dem Teil verschweißen und nicht am Stempel anhaften soll, der deshalb gekühlt und erst dann vom Teil zurückgezogen wird.

Die durchgeführten Versuche haben gezeigt, daß die gestellte Aufgabe durch die erfindungsgemäßen Maßnahmen äußerst erfolgreich gelöst werden konnte.

## Patentansprüche

1. Verfahren zum Herstellen einer zumindest bereichsweise strukturierten Oberfläche an einem aus expandierten Polypropylen-Partikeln gefertigten Schaumstoff-Formkörper, dadurch gekennzeichnet, daß die Oberflächenschicht im zu strukturierenden Bereich des Schaumstoff-Formkörpers plastifiziert und prägebearbeitet wird.

2. Verfahren nach Anspruch 1, dadurch gekennzeichnet, daß die Oberflächenschicht des Schaumstoff-Formkörpers zunächst plastifiziert und sodann prägebearbeitet wird.

3. Verfahren nach Anspruch 1, dadurch gekennzeichnet, daß die Oberflächenschicht des Schaumstoff-Formkörpers zeitgleich plastifiziert und prägebearbeitet wird.

4. Verfahren nach wenigstens einem der Ansprüche 1 bis 3, dadurch gekennzeichnet, daß die Oberflächenschicht des Schaumstoff-Formkörpers mittels eines aufgeheizten Prägestempels plastifiziert und prägebearbeitet wird.

5. Verfahren nach wenigstens einem der Ansprüche 1 bis 4, dadurch gekennzeichnet, daß der Schaumstoff-Formkörper zunächst bis auf eine seine Eigenstabilität gerade noch erhaltene Temperatur erwärmt und hiernach an der Oberflächenschicht plastifiziert und prägebearbeitet wird.
